# NEUE EUROPÄISCHE PATENTSCHRIFT

(11) **EP 2 301 727 B2**
(45) Veröffentlichungstag und Bekanntmachung des Hinweises auf die Entscheidung über den Einspruch: **19.12.2018**
(45) Hinweis auf die Patenterteilung: 24.08.2011
(21) Anmeldenummer: 10177605.2
(22) Anmeldetag: 20.09.2010
(51) Int. Cl.: B25J 19/00

(54) **Industrieroboter mit einem Gewichtsausgleichssystem**
Industrial robot with a weight balancing system
Robot industriel doté d'un système d'équilibrage du poids

(30) Priorität: 29.09.2009 DE 102009043405
(43) Veröffentlichungstag der Anmeldung: 30.03.2011
(73) Patentinhaber: KUKA Deutschland GmbH, 86165 Augsburg (DE)
(72) Erfinder: Merk, Günther, 86159 Augsburg (DE); Bayer, Albert, 86154 Augsburg (DE)
(74) Vertreter: Ege Lee & Partner Patentanwälte PartGmbB

(56) Entgegenhaltungen:
- DE-A1- 3 817 487
- DE-U1- 29 506 008
- KUKA Roboter GmbH: "Spezifikation KR 1000 1300 titan Pa, KR 1000 L950 titan PA"[Online] 2. Dezember 2008 (2008-12-02), Seiten 1-65, XP002613183 Internet citation Gefunden im Internet: URL:http://www.kuka-robotics.com/NR/rdonly res/1E8B9B50-FE3D-4D5F-BC4C-34BF995248C2/0 /Spez_KR_1000_titan_PA_de.pdf> [gefunden am 2008-12-08]
- Kaller: "Machine & Vehicles"[Online] 23. Juli 2005 (2005-07-23), Seiten 1-16, XP002613184 Internet Citation Gefunden im Internet: URL:http://www.bsm.com.cn/41/MAV.pdf> [gefunden am 2010-12-08]

## Beschreibung

Die Aufgabe der Erfindung wird gelöst durch einen Industrieroboter, gemäß dem Patentanspruch 1. Der erfindungsgemäße Industrieroboter umfasst demnach den für eine relativ große Traglast ausgelegten Roboterarm mit mehreren Achsen, vorzugsweise mit sechs Achsen. Unter einer großen Traglast wird eine Traglast von größer 80 kg, vorzugsweise größer als 90 kg verstanden.

Das Gewichtsausgleichssystem weist als Bauteile wenigstens einen Druckspeicher und wenigstens einen mit dem Druckspeicher in Wirkverbindung stehenden Druckzylinder auf. Diese Bauteile weisen erfindungsgemäß jeweils ein Volumen von maximal einem Liter und jeweils einen Maximaldruck von weniger als 1000 bar auf. Der Druckspeicher hält gegebenenfalls den für den Gewichtsausgleich und von dem Druckzylinder erzeugten Gegendrehmoment zum zumindest teilweisen, wenn nicht gar weitgehenden Kompensieren des von der relevanten Achse erzeugten Drehmoments bereit. Der Druckzylinder weist beispielsweise einen in einem Gehäuse verschieblich gelagerten Kolben auf.

Damit das Gewichtsausgleichssystem des erfindungsgemäßen Industrieroboters gegebenenfalls genügend Druck vorhalten kann, weist das Gewichtsausgleichssystem wenigstens zwei Druckspeicher auf, die mit einem einzigen Druckzylinder in Wirkverbindung stehen. Die beiden Druckspeicher und der Druckzylinder weisen jeweils ein Volumen von maximal einem Liter und jeweils einen Maximaldruck von weniger als 1000 bar auf.

Die Erfindung betrifft einen Industrieroboter mit einem Gewichtsausgleichssystem nach dem Oberbegriff des Anspruchs 1.

Das Dokument der Firma KUKA Roboter GmbH "Spezifikation KR1000 1300 titan PA, KR1000 L950 titan" offenbart einen solchen Roboter.

Unter einem Industrieroboter versteht man im Allgemeinen eine Handhabungsmaschine, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar ist. Industrieroboter umfassen im Wesentlichen eine Steuerungsvorrichtung und einen Roboterarm mit mehreren Achsen und gegebenenfalls Hebeln, die von Antrieben, die die Steuerungsvorrichtung ansteuern, bewegt werden.

Industrieroboter, insbesondere Industrieroboter mit einer relativ großen Traglast, können zumindest für eine ihrer Achsen, insbesondere für die zweite Achse der Kinematikkette bzw. die horizontal liegende Achse, ein Gewichts- bzw. Masseausgleichssystem aufweisen, das z.B. eine Schraubenfeder umfasst.

Die EP 0 819 041 B1 offenbart einen für Traglasten größer als 25 kg ausgelegten mehrachsigen Industrieroboter, der ein Gestell, eine Schwinge, einen Ausleger und eine Roboterhand aufweist, die gelenkig aneinander gelagert sind und mittels elektrischer Antrieb bewegt werden. Der Industrieroboter weist einen statischen hydraulischen Massenausgleich auf, der im Betrieb auf die Schwinge z.B. durch die Traglast oder den Ausleger einwirkenden dynamischen und statischen Lasten weitgehend kompensiert. Der hydraulische Masseausgleich weist einen Hydraulikzylinder und einen mit dem Hydraulikzylinder verbundenen Druckspeicher auf. Im Druckspeicher befindet sich eine unter hohem Druck vorgespannte Gasblase, die auf ein Ölpolster drückt und die Gegenkräfte zur Kompensierung der Schwingenlasten erzeugt.

Auf Basis von Druck arbeitende Massenausgleichsysteme, wie z.B. Gas-Gewichtsausgleichsysteme oder hydropneumatische Gewichtsausgleichsysteme, sind jedoch relativ teuer, da sie gegebenenfalls gesetzlichen Bestimmungen, wie z.B. die in Europa geltende Druckgeräte Richtlinie, erfüllen müssen. Das ist der Fall Für den Roboter der oben erwähnten Spezifikation der Firma KUKA Roboter GmbH.

Aufgabe der Erfindung ist es, einen kostengünstigeren, insbesondere für relativ große Traglasten ausgelegten Industrieroboter mit einem auf Gas basierenden Gewichtsausgleichsystem anzugeben.

Je nach Stellung bzw. Position des Roboterarms ist es nicht mehr sinnvoll, bei allen Achsen aufkommende Drehmomente allein durch die die Achsen bewegenden Antriebe bzw. gegebenenfalls den Antrieben zugeordneten Getriebe aufzubringen, weshalb der erfindungsgemäße Industrieroboter das Gewichtsausgleichssystem aufweist. Um dieses Gewichtsausgleichssystem relativ klein bzw. kompakt auszuführen, basiert dieses auf Gas. Ein solches Gewichtsausgleichssystem umfasst mehrere Bauteile, die jeweils unter Druck stehen. Erfindungsgemäß weist nun jedes dieser mit einem Druck beaufschlagte Bauteil ein Volumen von kleiner als 1 Liter und einen Maximaldruck von weniger als 1000 bar auf. Insbesondere sind diese Bauteile derart ausgelegt, dass der Betriebsdruck auch in extremen Positionen des Industrieroboters und bei erhöhten Umgebungstemperaturen stets unter 1000 bar liegt und einen hinreichend großen Sicherheitsabstand gegenüber dem Berstdruck des relevanten Bauteils aufweist.

Aufgrund dieser erfindungsgemäßen Auslegung der mit Druck beaufschlagten Bauteile des vorzugsweise als hydropneumatisches Gewichtsausgleichssystem ausgeführte Gewichtsausgleichssystem des erfindungsgemäßen Industrieroboters ist sicher gestellt, dass das Gewichtsausgleichssystem und demnach auch der erfindungsgemäße Industrieroboter während seines bestimmungsgemäßen Betriebs niemals unter die in Europa geltende Druckbehälter Richtlinie fällt. Somit kann gegebenenfalls auf eine aufwändige Prüfung, Dokumentation oder Baumusterabnahme des erfindungsgemäßen Industrieroboters bzw. dessen Gewichtsausgleichssystems verzichtet werden. Außerdem können gegebenenfalls auf ansonsten nötige Bauteile des Gewichtsausgleichssystems, wie z.B. einem Speichersicherheitsventil, verzichtet werden.

Ein weiterer Vorteil des erfindungsgemäßen Industrieroboters kann sein, dass gegebenenfalls eine Führung von Kabeln am Industrieroboter wesentlich einfacher ist, da das Gewichtsausgleichssystem relativ kompakt realisiert werden kann. Dies kann zu entsprechende Kostenersparnissen durch eine verbesserte Gestaltung der Kabel führen.

Um sicher zu stellen, dass die mit Druck beaufschlagten Bauteile während des bestimmungsgemäßen Betriebs des erfindungsgemäßen Industrieroboters stets unterhalb von 1000 bar liegen, sind die mit Druck beaufschlagten Bauteile vorzugsweise derart ausgeführt, dass ihre jeweiligen Maximaldrucke deutlich kleiner als 1000 bar sind. Die jeweiligen Maximaldrücke sind insbesondere maximal 400 bar, insbesondere maximal 350 bar und vorzugsweise maximal 300 bar.

Gemäß einer Ausführungsform des erfindungsgemäßen Industrieroboters weist der Roboterarm ein Karussell und eine Schwinge auf, wobei die dem Gewichtsausgleichsystem zugeordnete Achse der Schwinge zugeordnet ist. Die der Schwinge zugeordnete Achse wird bisweilen auch als Achse 2 bezeichnet und ist gegebenenfalls dem größten Drehmoment ausgesetzt, weshalb gemäß dieser Ausführungsform das Gewichtsausgleichssystem dieser Achse zugeordnet ist. Aufgrund der erfindungsgemäßen Dimensionierung des Gewichtsausgleichssystems kann dieses relativ kompakt ausgeführt werden, so dass die dem Gewichtsausgleichssystem angrenzenden Bauteile, wie insbesondere das Karussell und die Schwinge, verbessert ausgeführt werden können.

Aufgrund der erfindungsgemäßen Dimensionierung der mit Druck beaufschlagten Bauteile des Gewichtsausgleichssystems kann dieses, wie bereits ausgeführt, relativ kompakt ausgeführt werden. Dadurch ist es möglich, die Lagerstelle des Gewichtsausgleichssystems deutlich näher an der Wirklinie der auszuübenden Ausgleichskraft anzuordnen. Dadurch ist es nach einer Variante des erfindungsgemäßen industrieroboters möglich, mit nur einer insbesondere relativ kompakten Lagerstelle auszukommen. Insbesondere kann das Gewichtsausgleichssystem mittels eines einzigen Lagers an dem Karussell gelagert sein. Der Wegfall einer zweiten Lagerstelle spart nicht nur das Lager selbst, sondern auch die umbauende Struktur ein. Neben der Materialersparnis wird auch eine vereinfachte Fertigung des Karussells ermöglicht, gegebenenfalls können kleinere und damit kostengünstigere Fertigungsanlagen genützt werden. Außerdem wird es gegebenenfalls erlaubt, die Schwinge in ihrer Gestaltung freier und somit kostengünstiger zu gestalten, wodurch z.B. Werkstoff eingespart werden kann.

Somit erfolgt die Auslegung des Gewichtsausgleichssystems des erfindungsgemäßen Industrieroboters gegebenenfalls derart, dass der Betriebsdruck in extremen Positionen und bei erhöhten Umgebungstemperaturen immer noch unter dem zulässigen Betriebsdruck liegt und eine hinreichend große Sicherheit gegenüber dem Berstdruck hat. Bei der Befüllung der relevanten Bauteile werden gegebenenfalls die Befülldrücke kontrolliert und protokolliert, so dass ausgeschlossen werden kann, dass ein Gewichtsausgleichssystem mit falschen Parametern betrieben wird und die Sicherheiten nicht mehr hinreichend sind.

Insbesondere wird bei der Befüllung die Befülldrücke durch ein Begrenzungsmittel wie z.B. eine druckbeaufschlagte Bertscheibe begrenzt, so dass die Einhaltung eines gegebenen Grenzwertes der Befülldrücke gewährleistet ist. Auch für einen Käufer bzw. Betreiber des erfindungsgemäßen Industrieroboters können sich Einsparung beispielsweise durch nicht benötigte Abnahmen (Erstinbetriebnahme, wiederkehrende Prüfung) ergeben.

Insbesondere bei einem Einsatz eines Hydropneumatiksystems als Gewichtsausgleichssystem können sich auch Einsparungen fürden erfindungsgemäßen Industrieroboters ergeben, da dieses gegebenenfalls eine kostengünstigere Gestaltung des gesamten Bereichs um die relevante Achse, gegebenenfalls um die Achse 2 ermöglicht.

Ein Ausführungsbeispiel der Erfindung ist exemplarisch in den beigefügten schematischen Zeichnungen dargestellt. Es zeigen:
- Fig. 1: einen Industrieroboter mit einem Gewichtsausgleichs- system und
- Fig. 2: das Gewichtsausgleichssystem.

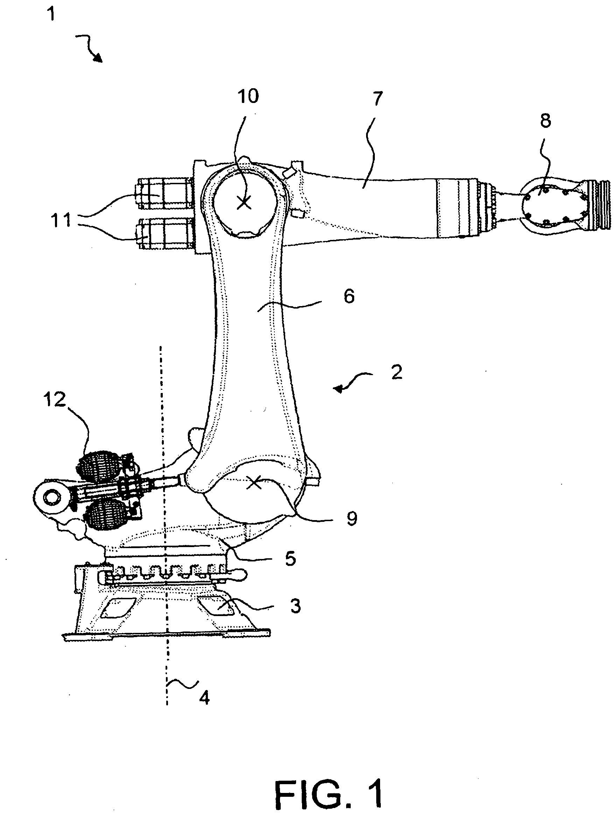

Die Fig. 1 zeigt in einer Seitenansicht einen industrieroboter 1 mit einem Roboterarm 2, der für große Traglasten von insbesondere größer als 90 kg ausgelegt ist.

Der Roboterarm 2 umfasst im Falle des vorliegenden Ausführungsbeispiels ein ortsfestes oder bewegliches Gestell 3 und ein relativ zum Gestell 3 um eine vertikal verlaufende Achse 4, die auch als Achse 1 bezeichnet wird, drehbar gelagertes Karussell 5. Der Roboterarm 2 des Industrieroboters 1 weist im Falle des vorliegenden Ausführungsbeispiels ferner eine Schwinge 6, einen Ausleger 7 und eine vorzugsweise mehrachsige Roboterhand 8 auf. Die Schwinge 6 ist am unteren Ende z.B. an einem nicht näher dargestellten Schwingenlagerkopf auf dem Karussell 5 um eine vorzugsweise horizontale Achse 9, die auch als Achse 2 bezeichnet wird, schwenkbar gelagert. Am oberen Ende der Schwinge 6 ist wiederum um eine ebenfalls vorzugsweise horizontale Achse 10 der Ausleger 7 schwenkbar gelagert. Dieser trägt endseitig die Roboterhand 8 mit ihren vorzugsweise drei Achsen, die in der Figur 1 nicht näher dargestellt sind.

Um den Industrieroboter 1 bzw. dessen Roboterarm 2 zu bewegen, umfasst dieser in allgemein bekannter Wiese mit einer nicht näher dargestellten Steuervorrichtung verbundene Antriebe, die insbesondere elektrische Antriebe sind. In der Figur 1 sind nur einige der elektrischen Motoren 11 dieser Antriebe gezeigt.

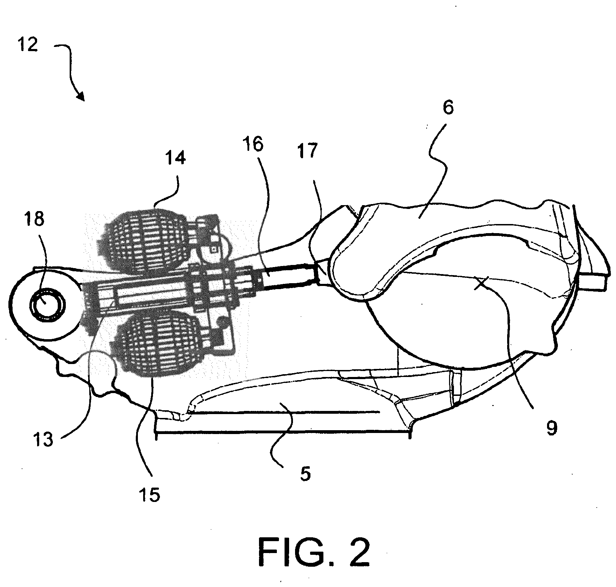

Die im Betrieb des Industrieroboters 1 auf die Schwinge 6 durch die Traglast, den Ausleger 6, usw. einwirkenden dynamischen und/oder statischen Lasten werden im Falle des vorliegenden Ausführungsbeispiels durch ein in der Fig. 2 näher dargestelltes, auf Gas basierendes Gewichtsausgleichssystem 12 zumindest weitgehend kompensiert. Das Gewichtsausgleichssystem 12 ist insbesondere ein Gas-Gewichtsausgleichssystem oder, wie dies beim vorliegenden Ausführungsbeispiel der Fall ist, ein hydropneumatisches Gewichtsausgleichssystem.

Im Falle des vorliegenden Ausführungsbeispiels weist das Gewichtsausgleichssystem 12 einen Hydraulikzylinder 13 und zwei Druckspeicher 14, 15 auf, die mit dem Hydraulikzylinder 13 verbunden sind. Die Druckspeicher 14, 15 sind z.B. auf dem Hydraulikzylinder 13 befestigt und stehen mit diesem in einer Leitungsverbindung.

In den Druckspeicher 14, 15 befindet sich jeweils eine nicht näher dargestellte, unter Druck vorgespannte Gasblase, die z.B. auf ein Ölpolster drückt und die Gegenkräfte zur Kompensierung der Schwingenlasten erzeugt. Der Druck der beiden Druckspeicher 14, 15 ist jeweils derart gewählt, dass diese auch bei extremen Positionen des Roboterarms 2 und bei erhöhten Umgebungstemperaturen stets kleiner als 400 bar, insbesondere kleiner als 350 bar und vorzugsweise kleiner als 300 bar sind. Des Weiteren sind die beiden Druckspeicher 14, 15 derart ausgelegt, dass ihre Volumen, die für die jeweilige Gasblase vorgesehen sind, kleiner als 1 Liter betragen.

Im Falle des vorliegenden Ausführungsbeispiels weist der Hydraulikzylinder 13 einen Kolben 16 auf, der z.B. über ein Lagerauge 17 drehbar an der Schwinge 6 angelenkt ist. Der Hydraulikzylinder 13 ist seinerseits am rückwärtigen Ende mittels eines einzigen Schwenklagers 18 am hinteren Rand des Karussells 5 gelagert.

Der Hydraulikzylinder 13 ist somit derart an dem Karussell 5 und über seinen Kolben 16 an der Schwinge 6 befestigt, dass der Kolben 16 Schwenkbewegungen der Schwinge 6 um deren Achse 9 folgen kann. Beispielsweise beim Abschwenken der Schwinge 6 fährt er aus und pumpt dabei Hydrauliköl in die Druckspeicher 14, 15, welches die relevanten Gasblasen komprimiert. Die federnde Reaktionskraft der Gasblasen wirkt auf den Kolben 16 zurück und kompensiert bei entsprechend abgestimmter Vorspannung der Gasblasen die von außen auf die Schwinge 6 einwirkenden Kräfte und Momente.

Im Falle des vorliegenden Ausführungsbeispiels ist der Hydraulikzylinder 13 derart ausgeführt, dass er ein Volumen von kleiner als 1 Liter aufweist. Auch ist der Hydraulikzylinder 13 derart ausgebildet, dass auch bei extremen Positionen des Roboterarms 2 und bei erhöhten Umgebungstemperaturen stets der Druck des Hydraulikzylinders 13 kleiner als 400 bar, insbesondere kleiner als 350 bar und vorzugsweise kleiner als 300 bar ist.

Somit ist sicher gestellt, das alle mit Druck beaufschlagten Bauteile des Gewichtsausgleichssystems 12, also insbesondere die beiden Druckspeicher 14, 15 und der Hydraulikzylinder 13 stets jeweils ein Volumen von kleiner als 1 Liter und einen Maximaldruck von deutlich weniger als 1000 bar aufweisen.

## Patentansprüche

1. Industrieroboter, aufweisend einen für eine Traglast größer als 80 kg ausgelegten Roboterarm (2) mit mehreren Achsen (4, 9, 10) und mit einem auf Gas basierenden Gewichtsausgleichssystem (12) für wenigstens eine der Achsen (9), wobei das Gewichtsausgleichsystem (12) als Bauteile wenigstens einen Druckspeicher (14, 15) und wenigstens einen mit dem Druckspeicher (14, 15) in Wirkverbindung stehenden Druckzylinder (13) aufweist, **dadurch gekennzeichnet, dass** die mit Druck beaufschlagten Bauteile (13-15) des Gewichtsausgleichssystems (12) jeweils ein Volumen von kleiner als 1 Liter und einen Maximaldruck von weniger als 1000 bar aufweisen und das Gewichtsausgleichssystem (12) als Bauteile wenigstens zwei Druckspeicher (14, 15) aufweist, die mit einem einzigen Druckzylinder (13) in Wirkverbindung stehen.

2. Industrieroboter nach Anspruch 1, dessen Traglast größer als 90 kg beträgt.

3. Industrieroboter nach einem der Ansprüche 1 oder 2, bei dem die mit Druck beaufschlagten Bauteile (13-15) jeweils einen Maximaldruck von deutlich weniger als 1000 bar, insbesondere von maximal 400 bar, insbesondere maximal 350 bar, vorzugsweise maximal 300 bar aufweisen.

4. Industrieroboter nach einem der Ansprüche 1 bis 3, dessen Roboterarm (2) ein Karussell (5) und eine Schwinge (6) aufweist und die dem Gewichtsausgleichsystem (12) zugeordnete Achse (9) der Schwinge (6) zugeordnet ist.

5. Industrieroboter nach Anspruch 4, bei dem das Gewichtsausgleichssystem (12) mittels eines einzigen Lagers (18) an dem Karussell (5) gelagert ist.

6. Industrieroboter nach einem der Ansprüche 1 bis 5, bei dem das auf Gas basierende Gewichtsausgleichssystem (12) ein Gas-Gewichtsausgleichssystem oder ein hydropneumatisches Gewichtsausgleichssystem ist.

## Claims

1. Industrial robot, comprising a robot arm (2) with a plurality of axes (4, 9, 10) designed for a ultimate load greater than 80 kg and a gas-based weight balancing system (12) for at least one of the axes (9), whereby the weight balancing system (12) of which comprises as components at least one pressure accumulator (14, 15) and at least one pressure cylinder (13) that is in operational connection with the pressure accumulator (14, 15), **characterised in that** the components (13-15) of the weight balancing system (12) charged with pressure each have a volume of less than 1 litre and a maximum pressure of less than 1,000 bar, and that the weight balancing system (12) comprises as components at least two pressure accumulators (14, 15), which are in operational connection with a single pressure cylinder (13).

2. Industrial robot according to claim 1, the ultimate load of which is greater than 90 kg.

3. Industrial robot according to claim 1 or 2, wherein the components (13-15) charged with pressure are each under a maximum pressure of significantly less than 1,000 bar, in particular a maximum of 400 bar, in particular a maximum of 350 bar, preferably a maximum of 300 bar.

4. Industrial robot according to any one of claims 1 to 3, the robot arm (2) of which comprises a carousel (5) and a rocker (6), and the axis (9) of the weight balancing system (12) is assigned to the rocker (6).

5. Industrial robot according to claim 4, wherein the weight balancing system (12) is supported on the carousel (5) by means of a single bearing (18).

6. Industrial robot according to any one of claims 1 to 5, wherein the gas-based weight balancing system (12) is a gas weight balancing system or a hydropneumatic weight balancing system.

## Revendications

1. Robot industriel, présentant un bras de robot (2) conçu pour une charge supérieure à 80 kg, comportant plusieurs axes (4, 9, 10) et un système d'équilibrage de poids (12) à base de gaz pour au moins des axes (9), dont le système d'équilibrage de poids (12) présente en tant que composants au moins un accumulateur de pression (14, 15) et au moins un cylindre compresseur (13) qui est en liaison active avec l'accumulateur de pression (14, 15), **caractérisé en ce que** les composants du système d'équilibrage de poids (13 - 15) sollicités par pression présentent chacun un volume de moins de 1 litre et une pression maximum de moins de 1000 bar, et le système d'équilibrage de poids (12) présente en tant que composants au moins deux accumulateurs de pression (14, 15) qui sont en liaison active avec un seul cylindre compresseur (13)..

2. Robot industriel selon la revendication 1, dont la charge est supérieure à 90 kg.

3. Robot industriel selon la revendication 1 ou 2, dans lequel les composants (13 - 15) sollicités par pression présentent chacun une pression maximum de nettement moins de 1000 bar, en particulier de 400 bar au maximum, en particulier de 350 bar au maximum, en particulier de 300 bar au maximum.

4. Robot industriel selon l'une des revendications 1 à 3, dont le bras de robot (2) présente un carrousel (5) et une bielle oscillante (6) et en ce que l'axe (9) associé au système d'équilibrage de poids (12) est associé à la bielle oscillante (6).

5. Robot industriel selon la revendication 4, dans lequel le système d'équilibrage de poids (12) est monté sur le carrousel (5) au moyen d'un seul palier (18).

6. Robot industriel selon l'une des revendications 1 à 5, dans lequel le système d'équilibrage de poids (12) à base de gaz est un système d'équilibrage de poids à gaz ou un système d'équilibrage de poids hydropneumatique.
